# EUROPÄISCHE PATENTANMELDUNG

(11) **EP 4 425 619 A2**
(43) Veröffentlichungstag der Anmeldung: **04.09.2024**
(21) Anmeldenummer: 24160943.7
(22) Anmeldetag: 01.03.2024
(51) Int. Cl.: H01M 6/52, H01M 10/052, H01M 10/54

(54) **VERFAHREN UND VORRICHTUNG ZUM RECYCLIEREN VON BATTERIEN**

(30) Priorität: 03.03.2023 CH 2322023
(71) Anmelder: Kyburz Switzerland AG, 8427 Freienstein (CH)
(72) Erfinder: GROUX, Olivier, 8427 Freienstein (CH); AYANA, Dawit, 8427 Freienstein (CH); FLASCHENTRÄGER, David, 8427 Freienstein (CH)
(74) Vertreter: Frei Patent Attorneys

(57) **Zusammenfassung**

Die Erfindung betrifft ein Verfahren und eine Vorrichtung zum Recyclen von Batterien (1, 51), welche jeweils mindestens einen Zellenverbund (4, 54) mit mindestens zwei Zellen (5, 55) enthalten, wobei die Zellen (5, 55) jeweils Elektrodenpakete (10, 60) mit Elektroden enthalten. Zum Öffnen der Zellen (5, 55) wird der Zellenverbund (4, 54) in einer Öffnungseinrichtung (80) bereitgestellt und die Zellengehäuse (6, 56) werden im Zellenverbund (4, 54) mittels eines Öffnungswerkzeugs (81) geöffnet. Aus den geöffneten Zellengehäusen (6, 56) werden die Elektrodenpakete (10, 60) aus den Zellengehäusen (6, 56) im Zellenverbund (4, 54) entnommen. Anschliessend wird der ausgeräumte Zellenverbund (4, 54) aus der Öffnungseinrichtung (80) entnommen und separat recycliert.

## Beschreibung

Die Erfindung bezieht sich auf das Gebiet des Batterie-Recyclings. Sie betrifft ein Verfahren und eine Anlage zum Recyclieren (Rezyklieren, Wiederverwerten) von Batterien, insbesondere von Lithium-Ionen-Batterien, wie Lithium-Ionen-Akkumulatoren.

Lithium-Ionen-Akkumulatoren finden aufgrund ihrer vergleichsweise hohen, spezifischen Energie eine immer grössere Verbreitung unter den wiederaufladbaren Batterien.

Unter Batterie ist im Rahmen dieser Patentanmeldung ein Speicher für elektrische Energie auf elektrochemischer Basis zu verstehen. Unter Akkumulator ist eine wiederaufladbare Batterie zu verstehen.

Neben dem Einsatz in mobilen, elektronischen Geräten, wie Laptops, Digitalkameras, Mobiltelefone, Tablets oder in anderen Mobilgeräten, wie Taschenlampen oder kabellose betriebene Elektrowerkzeuge, gewinnt der Einsatz von Lithium-Ionen-Akkumulatoren insbesondere im Wachstumssektor der Elektromobilität stark an Bedeutung. Lithium-Ionen-Akkumulatoren dienen in der Elektromobilität als Energiespeicher z. B. für Elektroautos, Hybridfahrzeuge, Elektrofahrräder, Elektromotorroller und andere Elektrofahrzeuge, sowie für Flugobjekte, wie Drohnen.

Die steigende Nachfrage nach Elektrofahrzeugen führt auch zu einem stark steigenden Bedarf an Lithium-Ionen-Akkumulatoren. Die in einigen Ländern bereits geplante, zukünftige Beschränkung bei der Zulassung von Verbrennungsmotoren wird diese Entwicklung noch weiter beschleunigen.

Lithium-Ionen-Akkumulatoren ist ein Sammelbegriff für Akkumulatoren, bei welchen an der positiven Elektrode (Kathode) ein Aktivmaterial mit Lithium, z. B. mit einem Lithium-Metalloxid bzw. mit einem mit Lithium dotierten Metalloxid, eingesetzt wird. Das Aktivmaterial ist z. B. in Form einer Beschichtung auf einem stromführenden Leiter (Träger) aufgebracht, welcher z. B. aus (Rein-) Aluminium sein kann. Das Aktivmaterial wird beispielsweise in ein Trägermaterial eingebettet, welches auch als Bindemittel bei der Beschichtung des elektrischen Leiters dient.

Das Aktivmaterial der negativen Elektrode (Anode) umfasst insbesondere elementaren Kohlenstoff. Das Aktivmaterial umfasst insbesondere Graphit oder besteht aus diesem. Das Aktivmaterial ist ebenfalls in Form einer Beschichtung auf einem stromführenden Leiter (Träger) der Anode, wie z. B. Kupfer, aufgebracht.

Die Aktivmaterialien umfassen die chemisch aktiven Substanzen, die für die Energiespeicherung in Batterien verantwortlich sind, und welche gegebenenfalls über Bindemittel auf den stromführenden Leiter (Träger) aufgebracht sind.

Der Träger kann z. B. mittels eines Druckverfahrens, wie Siebdruckverfahren, mit dem Aktivmaterial beschichtet sein. Der Träger kann auch über ein so genanntes "slot-die coating" oder mittels eines trockenen Beschichtungsverfahrens, wie Lamination, mit dem Aktivmaterial beschichtet sein.

Zwischen der Anode und der Kathode ist ein elektrisch isolierender Separator angeordnet, welcher einen direkten elektrischen Kontakt zwischen Anode und Kathode verhindern soll. Der Separator ist insbesondere aus einem nicht leitenden Material, wie Kunststoff, z. B. einem Polyethylen oder Polypropylen. Der Separator kann auch aus einem keramischen Material sein oder dieses enthalten.

Die Anordnung aus Kathode, Separator und Anode wird von einem Elektrolyten umgeben, welcher die Bewegung der Lithium-Ionen zwischen Anode und Kathode gewährleistet. Der Elektrolyt ist insbesondere fliessfähig bzw. flüssig.

Lithium-Ionen-Akkumulatoren zeichnen sich dadurch aus, dass sich die Lithium-Ionen während des Ladens/Entladens des Akkumulators zwischen der Anode und Kathode und durch den Separator hindurch bewegen können. Das heisst, beim Laden des Akkumulators bewegen sich positiv geladene Lithium-Ionen von der Kathode durch den Separator zur Anode, wo sie sich anlagern. Beim Entladen wandern die Lithium-Ionen wieder durch den Separator zur Kathode zurück.

So sind beispielsweise Lithium-Kobaltdioxid-Akkumulatoren, Lithium-Nickel-Mangan-Cobalt-Oxiden (NMC-Akkumulatoren) und Lithium-Eisenphosphat-Akkumulatoren bzw. Lithium-Ferrophosphat-Akkumulator (LFP-Akkumulatoren) bekannt.

Lithium-Ionen-Akkumulatoren, insbesondere Autobatterien, welche für hohe Spannungen und/oder hohe Leistungen ausgelegt sind, setzen sich in der Regel aus einer Vielzahl von einzelnen Zellen zusammen, welche miteinander über eine Reihenschaltung (höhere Spannung) oder Parallelschaltung (höhere Kapazität) oder einer Kombination von beidem miteinander verbunden sind.

Eine Zelle ist die grundlegende, kleinste elektrochemische, stromproduzierende Einheit einer Batterie bzw. eines Akkumulators, welche zwei Elektroden, einen Elektrolyten, einen Separator und gegebenenfalls ein eigenes Gehäuse umfasst. Die einzelne Zelle kann technisch betrachtet als eigenständige Batterie-Energiequelle funktionieren.

Eine Zelle enthält mindestens ein Elektrodenpaket aus Kathode, Anode und den dazugehörigen elektrischen Leitern sowie einem oder mehreren Separatoren. Eine Zelle kann ein oder mehrere Elektrodenpakete enthalten.

Die Elektrodenpakete sind insbesondere in einem Gehäuse der Zelle untergebracht, welches auch den Elektrolyten aufnimmt, in welchem das Elektrodenpaket in der Regel getaucht ist. Das Gehäuse kann z. B. aus Kunststoff oder Metall, wie Aluminium, sein. Ein Gehäuse aus Metall weist den Vorteil auf, dass der Elektrolyt nicht hindurch diffundieren kann.

Bei gängigen Batterie-Typen liegen die Kathode, die Anode und der Separator als Schichtmaterialien, wie z. B. Bänder vor. Die Bänder sind beispielsweise als Folien ausgebildet.

Das Elektrodenpaket, das heisst die Anordnung von Anode, Separator und Kathode kann gewickelt oder geschichtet bzw. gestapelt oder gefaltet sein.

Bei gestapelten Elektrodenpaketen sind die einzelnen Elektrodenfolien z. B. in einer sich wiederholenden Anordnung aus Anode, Separator, Kathode, Separator, usw. gestapelt.

Gefaltete Elektrodenpakete können z. B. nach dem so genannten Z-Folding-Verfahren hergestellt sein. Im Z-Folding Verfahren werden die einzelnen Elektrodenfolien abwechselnd von links und rechts in Separatortaschen eines gefalteten Separatorenbandes eingebracht.

Bei einer gängigen Zellen-Bauform ist das Elektrodenpaket als Wickel in einem zylindrischen Gehäuse (Rundzelle) untergebracht. Das heisst, die einzelnen Schichten bzw. der Bandverbund, welche die Anode, Kathode und Separatoren bilden, sind zu einem Wickel gerollt in einem, insbesondere zylindrische, Gehäuse eingebaut und in einem insbesondere flüssigen Elektrolyten getränkt.

Das Gehäuse der Zelle und damit auch das gewickelte, gestapelte oder gefaltete Elektrodenpaket müssen nicht zwingend kreiszylindrisch sein, sondern können auch eine andere Zylinderform aufweisen und zum Beispiel prismatisch, insbesondere quaderförmig sein.

Batterien, wie Lithium-Ionen-Akkumulatoren lassen sich bei Erreichen ihrer Lebensdauer (Überalterung, Verlust an Elektrolyten) oder bei Auftreten eines Defektes (z. B. durch Tiefentladung) nicht regenerieren. Sie müssen vielmehr entsorgt werden. Um einerseits Umweltbelastungen zu vermeiden und andererseits die in den Batterien enthaltenen Rohstoffe der Industrie erneut zugänglich zu machen, werden die Ausgangskomponenten in einem Recyclingverfahren zurückgewonnen und getrennt voneinander verwertet bzw. aufbereitet. Hierzu bestehen in gewissen Ländern sogar gesetzliche Bestimmungen, welche das Batterie-Recycling vorschreiben.

Da die Lithium-Ionen-Akkumulatoren insbesondere in den Aktivmaterialien wertvolle Rohstoffe wie z. B. Mangan, Kobalt, Nickel, Graphit, Titanat, Schwefel und vor allem Lithium sowie z. B. auch Aluminium und Kupfer enthalten können, ist es erstrebenswert, die einzelnen Rohstoffe in möglichst grosser Reinheit zu separieren und der Wiederverwertung zuzuführen.

Die einzelnen Rohstoffe sollen dabei insbesondere in einer Reinheit zurückgewonnen werden, welche ihre Wiederverwendung in neuen Batterien möglichst ohne aufwendige Aufbereitungsschritte erlauben.

Im Batterie-Recycling wird zwischen mechanischen, thermischen und chemischen (Aufbereitungs-) Prozessen unterschieden, welche in unterschiedlicher Kombination eingesetzt werden können.

Bei einem mechanischen (Aufbereitungs-) Prozess werden die gestapelten, gefalteten oder gewickelten Folien der Elektrodenpakete mit sehr hoher Trennungseffizienz mechanisch separiert.

Hierzu werden üblicherweise Schredder eingesetzt, welche die Batterien bzw. Zellen in kleine Teile zerkleinern, die anschliessend sortiert und weiter aufbereitet werden müssen. Bei diesem Vorgang wird jedoch auch die Morphologie der Rohstoffe verändert, weshalb weitere Prozessschritte notwendig sind, um die Rohstoffe in der für die Wiederverwendung erforderlich hohen Reinheit zurückzugewinnen. Bei einem mechanischen Aufbereitungsprozess ist es grundsätzlich möglich, sämtliche Ausgangsstoffe der Batterie in der Reinform wieder zurückzugewinnen und diese in einem geschlossenen Batterie-Kreislauf der Wiederverwendung in neuen Batterien zuzuführen.

Der Aufwand hierzu ist jedoch vergleichsweise hoch. Je geringer der Wert der recyclierten Materialien ist, desto unrentabler ist ein solches Verfahren. Da die technische Entwicklung von Batterie-Zellen, in Richtung kostengünstiger Rohstoffe geht, wird die mechanische Aufbereitung von Batterie-Zellen mittels Schreddern in Zukunft weiter an Wirtschaftlichkeit einbüssen. Dies trifft beispielsweise auf Kobalt- und Nickelfreie Zell-Chemien zu.

Bei einem thermischen (Aufbereitungs-) Prozess, auch Pyrometallurgie genannt, werden die metallischen Anteile unter Zufuhr von Wärme geschmolzen. In Bädern, z.B. aus flüssigem Kupfer oder Blei, können die Metalle bei sehr hoher Temperatur von z. B. bei über 1200°C Legierungen bilden, welche anschliessend in die einzelnen reinen Metalle (wie Kupfer, Cobalt und Nickel) aufgetrennt werden. Batterie-Bestandteile aus Kunststoff, z. B. Gehäuseteile oder Separatoren, sowie die brennbare Elektrolytflüssigkeit oder das Anodenmaterial Graphit werden dabei verbrannt, beziehungsweise dienen als Brennstoff. Die Metalle Lithium und Aluminium gelangen in oxidierter Form in die Schlacke und werden in dieser Form der Wiederverwertung zugeführt, z.B. als Zuschlagstoff in der Betonindustrie. Alternativ können die Lithium- und Aluminium-Oxide in einem Zusatzschritt (Reduktion) wieder zu reinen Metallen aufbereitet werden. Da beim thermischen Prozess unter anderem die brennbaren Komponenten verbrannt werden, ist bei diesem Prozess kein geschlossener Batterie-Kreislauf möglich.

Da der thermische (Aufbereitungs-) Prozess überdies sehr energieintensiv und wegen der Nichtverwertbarkeit von zahlreichen Rohstoffen auch nicht ressourcenschonend ist, ist diese Art der Aufbereitung nicht erste Wahl.

Beim chemischen (Aufbereitungs-) Prozess, auch Hydrometallurgie genannt, wird mit Hilfe von Lösungsmitteln, Säuren und Elektrizität das Aktivmaterial auf den Elektroden, ohne Einschmelzen mit hoher Reinheit separiert. Allerdings kann der Einsatz von Chemikalien die Umwelt belasten. Überdies sind chemische Prozesse vergleichsweise aufwändig, da ein professioneller Umgang mit den Chemikalien, erforderlich ist, welche nicht in die Umwelt gelangen und die Mitarbeiter gesundheitlich nicht gefährden dürfen. Überdies setzt ein chemischer (Aufbereitungs-) Prozess eine mechanische Vorbehandlung, wie Schreddern, inklusive Abscheidung von Schwer und Leichtmetallen voraus. Alles in allem ist die Aufbereitung der Aktivmaterialien zur Verwendung in neuen Batterien sehr aufwändig und erfordert einen mehrstufigen Prozess.

Beim so genannten direkten Batterie-Recycling werden die Rohstoffe in ihren Eigenschaften nicht verändert, so dass diese direkt wieder in den Batterie-Kreislauf eingebracht werden können. Beim direkten Batterie-Recycling stehen daher mechanische (Aufbereitungs-) Prozesse im Vordergrund, wobei auf den Einsatz von Schreddern verzichtet wird.

Beim direkten Batterie-Recycling liegt ein wesentlicher Arbeitsschritt darin, sich einen Zugang zu den vergleichsweise wertvollen Aktivmaterialen der Zellen zu verschaffen. Hierzu wird das Gehäuse der Zelle geöffnet und das Elektrodenpaket entnommen. Die einzelnen Komponenten (z.B. Bänder bzw. Folien) des Elektrodenpakets werden anschliessend vereinzelt. Das heisst, die einzelnen Komponenten der Zelle, wie Gehäuse und Bänder der Elektrodenpakete werden zuerst mechanisch separiert. Unter Komponenten des Elektrodenpakets sind dessen (festen) Bestandteile gemeint, welche die Elektroden sowie die Separatoren umfassen.

Die Aktivmaterialien auf den Elektrodenbändern (Kathode, Anode) werden anschliessend z. B. in einer Lösung, wie Wasser, wässriger Lösung, in Säure oder in Lauge, von der Trägerschicht abgelöst bzw. getrennt. Mit diesem Verfahren lassen sich praktisch alle Komponenten der Zelle in reiner Form umweltfreundlich, emissionsarm und mit wenig Energie wiedergewinnen. Insbesondere die Aktivmaterialien werden nicht beschädigt und lassen sich einfach aufbereiten.

Beim direkten Recycling von Batterie steht wie erwähnt die schrittweise Zerlegung der Batterie in die einzelnen Ausgangskomponenten im Mittelpunkt. Entsprechend lehrt der Stand der Technik die Zerlegung der Batterie in die einzelnen Batterie-Zellen, welche dann wiederum in Zellengehäuse und Elektrodenpakete weiter zerlegt werden.

Während der Trend beim Batterie-Recycling in Richtung direktes Recycling, also Zerlegen in die Einzelbestandteile geht, verläuft der Trend bei der Batterie-Entwicklung in Richtung kompaktere Batteriesysteme durch zunehmende Systemintegration. Dies erschwert allerdings das Zerlegen der Batterie in die Einzelkomponenten im Recycling-Prozess.

Auch der zunehmende Einsatz von Klebstoffen und Vergussmassen, welche verschiedene Funktionen im Betrieb der Batterie erfüllen können, wie z. B. elektrisch isolierende Funktion, Wärmeleitfunktion, Brandschutzfunktion, Verbindungsfunktion, Dämpfungsfunktion, Dichtungsfunktion, Toleranzausgleich, etc. erschweren das Zerlegen der Batterien ohne Einsatz von strukturzerstörenden Werkzeugen, wie Schredder.

So werden beispielsweise die Zellen einer Batterie in so genannten Zellenverbunden zusammengefasst.

Die Zellenverbunde sind in der Regel als Teil eines Zellenmoduls in einem Modulgehäuse untergebracht. Das Zellenmodul enthält entsprechend exakt einen Zellenverbund. Mehrere Zellenverbunde bzw. Zellenmodule bilden das Zellenpaket der Batterie aus, welches im Batteriegehäuse untergebracht ist. Das Zellenpaket der Batterie kann aber auch aus einem einzigen Zellenverbund bzw. Zellenmodul bestehen. Die Zellenverbunde bzw. Zellenmodule einer Batterie sind in der Regel elektrisch miteinander verbunden und in Reihe und/oder parallel geschaltet. Die Batterie kann ferner ein im Batteriegehäuse angeordnetes Batterie-Management-System (BMS) enthalten.

Das Verbinden der Zellen zu Zellenverbunden erleichtert die Endmontage der Batteriesysteme vor Ort. So lassen sich die im Zellenverbund bereits aufeinander ausgerichteten Zellen bzw. das aus mehreren Zellenverbunden gebildete Zellenpaket als Montageeinheit(en) einfach und schnell im Batteriegehäuse verbauen.

Während die Zellen eines Zellenverbundes bis anhin in der Regel mittels mechanischer Mittel im Verbund zusammengehalten wurden, werden die Zellen zunehmend mittels Klebestoff zu Zellenverbunden miteinander verklebt. Nicht selten kommen am Zellenverbund aus oben erwähnten Gründen auch noch Vergussmassen zum Einsatz.

Kunststoffverbindungen sind gegenüber mechanischen Verbindungen einfach und schnell in der Anwendung, kostengünstig und bei richtiger Wahl sehr robust und langlebig. Ferner lassen sich Klebeverbindungen einfach in einem automatisierten Prozess herstellen.

Da die in Batteriesystemen verwendeten Klebstoffe und Vergussmassen langlebig und resistent gegen Chemikalien sein sollen, ist das Vereinzeln der Zellen, d.h. heisst die Auftrennung der Klebverbindungen bzw. das Entfernen von Vergussmassen aus dem Zellenverbund sehr umständlich und aufwändig.

Obwohl das Batterie-Recycling oftmals mittels Recycling-Gebühren finanziert oder zumindest finanziell unterstützt wird, steht auch in dieser Branche eine möglichst hohe Wirtschaftlichkeit des Verfahrens im Vordergrund. Die Wirtschaftlichkeit eines Recycling-Verfahrens hängt unter anderem von folgenden Faktoren ab:
- hoher Durchsatz pro Zeiteinheit;
- hoher Automatisierungsgrad / wenig Handarbeit;
- hohe Reinheit der separierten Ausgangsmaterialien.

Es ist daher eine Aufgabe vorliegender Erfindung, ein Verfahren sowie eine dazugehörige Vorrichtung zum Recyclieren von Batterien bzw. deren Zellen vorzuschlagen, welches die oben genannten Anforderungen erfüllt.

Das Verfahren und die Vorrichtung sollen eine möglichst effiziente Entnahme der Elektrodenpakete aus den Zellen und entsprechend ein einfaches Separieren von Elektrodenpaketen und Zellengehäusen ermöglichen.

Überdies soll die Vorrichtung und das dazugehörige Verfahren möglichst einfach sowie ressourcenschonend und umweltfreundlich sein und auch möglichst wenig Energie benötigen.

Ferner ist es eine Aufgabe vorliegender Erfindung eine möglichst hohe Recyclingrate von z. B. bis über 90% zu erzielen.

Wenigstens eine der **Aufgaben** wird durch die unabhängigen Ansprüche 1 und 32 gelöst. Die abhängigen Ansprüche sowie die Beschreibung und die Figuren beinhalten besondere Ausführungsformen und Weiterbildungen der Erfindung.

Das Verfahren zum Recyceln von Batterien, welche jeweils mindestens einen Zellenverbund mit mindestens zwei Zellen enthalten, zeichnet sich erfindungsgemäss durch folgende Schritte aus:
- Bereitstellen mindestens eines Zellenverbundes in einer Öffnungseinrichtung;
- Öffnen der Zellengehäuse der mindestens zwei Zellen im Zellenverbund, insbesondere mittels mindestens einem Öffnungswerkzeug der Öffnungseinrichtung;
- Entnahme der Elektrodenpakete der mindestens zwei Zellen aus den Zellengehäusen im Zellenverbund;
- Entnahme des ausgeräumten Zellenverbundes aus der Öffnungseinrichtung.

Die Zellen bleiben bei der Entnahme der Elektrodenpakete und gegebenenfalls des Elektrolyten im Verbund. Die Zellen bleiben insbesondere auch nach Entnahme der Elektrodenpakete und gegebenenfalls des Elektrolyten im Verbund.

In Zellenverbunden sind die Zellen miteinander verbunden, insbesondere nicht (zerstörungsfrei) lösbar miteinander verbunden. So sind die Zellen in Zellenverbunden insbesondere über eine Stoffschlussverbindung, wie Klebeverbindung bzw. Vergussmasse, miteinander verbunden.

Der ausgeräumte Zellenverbund wird insbesondere separat recycliert. Dieser besteht in der Regel mehrheitlich aus leeren Zellengehäusen und Klebestoff bzw. Vergussmasse, welche die Zellengehäuse miteinander zum Zellenverbund verbinden.

So kann der ausgeräumte Zellenverbund eingeschmolzen werden, wobei die Kunststoffanteile (Klebestoff, Vergussmasse, etc.) verbrannt werden und die metallischen Wertstoffe übrigbleiben.

Es ist auch denkbar, dass der ausgeräumte Zellenverbund geshreddert und die geshredderten Teile anschliessend in einem geeigneten Verfahren recycliert werden.

"Ausgeräumt" bedeutet im vorliegenden Kontext, dass mindestens die Elektrodenpakete und insbesondere auch der Elektrolyt aus den Zellengehäusen entnommen sind.

Das Verfahren ist insbesondere ein direktes Recycling-Verfahren wie eingangs beschrieben. Die zu recyclierenden Batterien, sind insbesondere Lithium-Ionen-Batterien bzw. insbesondere Lithium-Ionen-Akkumulatoren.

Die zu recyclierenden Batterien können insbesondere auch Festkörperbatterien bzw. Festkörperakkumulatoren, auch Feststoffbatterien bzw. Feststoffakkumulator genannt, sein. Die Festkörperbatterien sind eine spezielle Bauform, bei welcher beide Elektroden und auch der Elektrolyt aus festem Material bestehen.

Die Zellen eines Zellenverbundes sind insbesondere miteinander verbunden, ganz besonders über Klebstoffverbindungen miteinander verbunden. Der Zellenverbund kann Teil eines Zellenmoduls sein und z. B. in einem Modulgehäuse eingelassen sein.

Die Zellen enthalten jeweils mindestens ein Elektrodenpaket mit Elektroden. Die Zellen können jeweils auch mehrere Elektrodenpakete enthalten. Die Elektroden umfassen insbesondere jeweils einen mit einem Aktivmaterial beschichteten, elektrisch leitenden Träger.

Die Zellen eines Zellenverbundes können über elektrisch leitende Verbindungen in Reihe geschaltet, parallel geschaltet oder eine Kombination davon sein. Die äusseren Pole der Zellen sind entsprechend über elektrisch leitende Verbindungen miteinander verbunden. Unter äusseren Polen sind die aussen am Zellengehäuse angeordneten Pole für die elektrischen Anschlüsse gemeint.

In einem vorbereitenden Schritt werden die Zellen des Zellenverbundes in einer Entladeeinrichtung insbesondere entladen. Die Entladung der Zellen dient unter anderem der Arbeitssicherheit. Durch das Entladen der Zelle werden beim Öffnen der Zelle sowie bei der nachfolgenden Aufbereitung der Zelle gefährliche Kurzschlüsse oder Nebenreaktionen verhindert. Insbesondere werden eine grosse Wärmeentwicklung und allfällige Batteriebrände verhindert.

Die Entladung erfolgt insbesondere aktiv. Als aktive Entladung ist insbesondere eine kontrollierte, das heisst gesteuerte Entladung über einen Verbraucher, wie z. B. einen Widerstand, zu verstehen. Das Entladeverfahren wird insbesondere vor der Demontage bzw. vor dem Öffnen der Zellen ausgeführt.

Es können insbesondere mehrere Zellen gleichzeitig im Verbund entladen werden. Es kann insbesondere vorgesehen sein, dass nicht die einzelnen Zellen, sondern die Batterie und somit die Zellen entladen werden. Dadurch könnte bei Reihenschaltung die hohe Spannung des Zellverbundes vorteilhaft genutzt werden.

Die mechanische Zerlegung der Batterie beginnt insbesondere mit dem Öffnen der Batterie und dem Freilegen des mindestens einen Zellenverbundes der Batterie bzw. des Batteriesystems.

Zur Vermeidung von Kurzschlüssen wird insbesondere in einem Prüfschritt die Spannung der einzelnen Zellen geprüft und sichergestellt, dass die Zellen eine Maximalspannung nicht überschreiten. Gegebenenfalls wird eine (weitere) Entladung der Zellen durchgeführt.

Gemäss einer möglichen Vorgehensweise wird der mindestens eine freigelegte Zellenverbund aus der Batterie bzw. aus dem Batteriegehäuse entnommen.

Der mindestens eine Zellenverbund wird der Öffnungseinrichtung zugeführt bzw. in dieser bereitgestellt, und insbesondere in eine Aufnahme der Öffnungseinrichtung platziert.

Es ist allerdings auch möglich, dass die Batterie mit dem mindestens einen Zellenverbund der Öffnungseinrichtung zugeführt bzw. in dieser bereitgestellt wird. Dies ist insbesondere dann der Fall, wenn der Zellenverbund mittels einer Vergussmasse im Batteriegehäuse befestigt ist.

In diesem Fall werden die Zellen im Batteriegehäuse im Zellenverbund geöffnet.

Der ausgeräumte Zellenverbund kann in einem dem Öffnungsschritt nachfolgenden Verfahrensschritt aus dem Batteriegehäuse entnommen oder gemeinsam mit dem Batteriegehäuse entsorgt bzw. der Wiederverwertung zugeführt werden.

Die Batterie kann gemäss dieser Vorgehensweise vor dem Zuführen zur bzw. Bereitstellen in der Öffnungseinrichtung geöffnet werden. Es ist aber auch denkbar, dass die Batterie in der Öffnungseinrichtung geöffnet wird. Das Öffnen der Batterie und das Freilegen des mindestens einen Zellenverbundes bzw. des mindestens einen Zellenmoduls der Batterie bzw. des Batteriesystems kann insbesondere durch die Öffnungseinrichtung erfolgen.

Enthält die Batterie mehrere Zellenverbunde so werden vor dem Öffnen der Zellen insbesondere die elektrischen Verbindungen zwischen den einzelnen Zellenverbunden unterbrochen. Dies kann je nach Vorgehensweise vor, mit oder nach der Entnahme der Zellenverbunde aus dem Batteriegehäuse erfolgen. Die Unterbrechung der elektrischen Verbindungen erfolgt z. B. mittels Durchtrennen der entsprechenden elektrischen Leiter.

Der mindestens eine Zellenverbund kann Teil eines Zellenmoduls mit mindestens einem und insbesondere mit mehreren Zellenverbunden sein. Die Batterie umfasst dabei mindestens ein Zellenmodul. Der mindestens eine Zellenverbund kann in einem Modulgehäuse des Zellenmoduls untergebracht sein.

Gemäss einer möglichen Vorgehensweise wird das mindestens eine Zellenmodul aus dem Batteriegehäuse entnommen und der mindestens eine Zellenverbund vom Zellenmodul separiert. So wird beispielsweise das Modulgehäuse geöffnet und der mindestens eine Zellenverbund aus dem Modulgehäuse entnommen.

Der mindestens eine Zellenverbund wird der Öffnungseinrichtung zugeführt bzw. in dieser bereitgestellt, und insbesondere in eine Aufnahme der Öffnungseinrichtung platziert.

Es ist allerdings auch möglich, dass das mindestens eine Zellenmodul mit dem mindestens einen Zellenverbund der Öffnungseinrichtung zugeführt bzw. in dieser bereitgestellt wird. Dies ist insbesondere dann der Fall, wenn der Zellenverbund mittels einer Vergussmasse im Modulgehäuse befestigt ist.

In diesem Fall werden die Zellen im Zellenmodul im Zellenverbund geöffnet. Der mindestens eine Zellenverbund kann in einem dem Öffnungsschritt nachfolgenden Verfahrensschritt von dem mindestens einen Zellenmodul separiert werden.

Ferner ist es auch möglich, dass die Batterie mit dem mindestens einen Zellenmodul der Öffnungseinrichtung zugeführt bzw. in dieser bereitgestellt wird. Dies ist insbesondere dann der Fall, wenn das Zellenmodul mittels einer Vergussmasse im Batteriegehäuse befestigt ist.

In diesem Fall werden die Zellen im Zellenmodul in der Batterie und im Zellenverbund geöffnet.

Das mindestens eine Zellenmodul mit dem mindestens einen ausgeräumten Zellenverbund kann in einem dem Öffnungsschritt nachfolgenden Verfahrensschritt aus dem Batteriegehäuse entnommen oder gemeinsam mit dem Batteriegehäuse und gegebenenfalls gemeinsam mit dem ausgeräumten Zellenverbund entsorgt bzw. der Wiederverwertung zugeführt werden.

Der mindestens eine ausgeräumte Zellenverbund kann in einem dem Öffnungsschritt nachfolgenden Verfahrensschritt von dem mindestens einen Zellenmodul separiert oder gemeinsam mit dem Modulgehäuse entsorgt bzw. der Wiederverwertung zugeführt werden.

Das Zellenmodul kann analog zur Batterie gemäss dieser Vorgehensweise vor dem Zuführen zur bzw. vor dem Bereitstellen in der Öffnungseinrichtung geöffnet werden. Es ist aber auch denkbar, dass das Zellenmodul in der Öffnungseinrichtung geöffnet wird. Das Öffnen des Zellenmoduls und das Freilegen des mindestens einen Zellenverbundes des Zellenmoduls kann insbesondere durch die Öffnungseinrichtung erfolgen.

Über eine Ausrichtvorrichtung kann der mindestens eine Zellenverbund in der Aufnahme der Öffnungseinrichtung ausgerichtet werden. Über eine Fixiervorrichtung kann der mindestens eine Zellenverbund in der Aufnahme der Öffnungseinrichtung fixiert werden. Die Ausricht- und/oder Fixiereinrichtung dienen insbesondere der genauen Positionierung des mindestens einen Zellenverbundes in der Öffnungseinrichtung. Die genaue Positionierung des mindestens einen Zellenverbundes kann z. B. für eine programmgesteuerte Führung des Öffnungswerkzeuges entlang von vordefinierten Trennlinien am Zellenverbund notwendig sein.

Die Ausrichtung, Fixierung und Positionierung des mindestens einen Zellenverbundes in der Öffnungseinrichtung erfolgt je nach Vorgehensweise direkt über die Ausrichtung, Fixierung bzw. Positionierung des mindestens einen Zellenverbundes oder indirekt über die Ausrichtung, Fixierung bzw. Positionierung der Batterie bzw. des Zellenmoduls in der Öffnungseinrichtung.

Die Zellengehäuse der Zellen werden im Zellenverbund insbesondere in einem Arbeitsschritt geöffnet. In einem Arbeitsschritt bedeutet insbesondere, dass der Zellenverbund während des Öffnens der Zellen in unveränderter Position in der Öffnungseinrichtung verbleibt.

"Im Zellenverbund" bedeutet, dass die Zellen während des Arbeitsschrittes im Verbund bleiben und insbesondere nicht vorgängig voneinander getrennt werden.

Das Öffnen der Zellengehäuse erfolgt insbesondere durch Auftrennen des Zellengehäuses, insbesondere mindestens einer Gehäusewand, entlang mindestens einer Trennlinie.

Die Trennlinie entspricht einer Linie am Zellengehäuse, entlang welcher das Zellengehäuse aufgetrennt wird. Die Trennlinie muss am Zellengehäuse nicht zwingend physisch vorhanden sein und kann z. B. als virtuelle Trennlinie vorhanden sein.

Die Trennlinie kann zum Beispiel eine Wand des Zellengehäuses umlaufen, insbesondere geschlossen umlaufen. Entsprechend wird beim Öffnen der Zelle die betreffende Wand wenigstens teilweise, insbesondere vollständig entlang der Trennlinie vom Zellengehäuse getrennt.

Der Begriff "umlaufend" bedeutet nicht, dass die Trennlinie in der Ebene der Wand liegen muss. "Umlaufend" bedeutet vielmehr, dass die Trennlinie die Wand in einer Normalprojektion umläuft.

Das Öffnen der Zellen kann zum Beispiel werkzeugfrei erfolgen. Dies trifft zum Beispiel dann zu, wenn die Zellengehäuse für ein werkzeugfreies Öffnen ausgelegt sind. Das Öffnen der Zellen erfolgt jedoch insbesondere mittels mindestens einem Öffnungswerkzeug.

Das Öffnen der Zellen kann je nach Gehäusedesign zerstörungsfrei oder unter Zerstörung des Gehäuses erfolgen.

Das Öffnen der Zellen kann mit oder ohne Öffnungswerkzeug von Hand erfolgen. Das Öffnen der Zellen erfolgt jedoch insbesondere automatisiert, z. B. computergesteuert mittels eines Öffnungswerkzeuges.

Generell können das Öffnen der Zellen, die Entnahme der Elektrodenpakete sowie des Elektrolyten in der Öffnungseinrichtung teil- oder vollautomatisiert, d.h. computergesteuert erfolgen.

Gemäss einer Ausführung des Verfahrens öffnet das mindestens eine Öffnungswerkzeug, insbesondere ein einzelnes Öffnungswerkzeug, die Zellengehäuse im Zellenverbund zellenübergreifend, bzw. trennt diese zellenübergreifend auf.

Zellenübergreifend bedeutet, dass das Öffnungswerkzeug an zwei oder mehr als zwei Zellen im Zellenverbund gleichzeitig Öffnungsschritte ausführt. Zellenübergreifend kann auch bedeuten, dass das Öffnungswerkzeug an mindestens zwei Zellen im Zellenverbund bis zum vollständigen Öffnen der Zellen abwechselnd Öffnungsschritte ausführt. Öffnungsschritte bedeutet insbesondere das Ausführen von Trennschritten entlang von Trennlinien.

So können insbesondere mehrere Zellen im Zellenverbund durch das mindestens eine Öffnungswerkzeug, insbesondere durch ein einzelnes Öffnungswerkzeug, gleichzeitig geöffnet werden. Das heisst, das mindestens eine Öffnungswerkzeug, insbesondere ein einzelnes Öffnungswerkzeug, trennt insbesondere mehrere Zellengehäuse gleichzeitig auf.

Gemäss einer besonderen Weiterbildung können mindestens zwei Öffnungswerkzeuge die Zellengehäuse im Zellenverbund auftrennen.

Dies kann z. B. ebenfalls jeweils zellenübergreifend geschehen.

Die mindestens zwei Öffnungswerkzeuge können gleichzeitig betrieben werden, das heisst am Öffnungsvorgang beteiligt sein.

Die mindestens zwei Öffnungswerkzeuge können zeitlich nacheinander in Betrieb sein bzw. betrieben werden, das heisst am Öffnungsvorgang beteiligt sein.

Es kann auch vorgesehen sein, dass ein einzelnes Öffnungswerkzeug Zellen des Zellenverbundes sequentiell, d.h. nacheinander öffnet. Dies im Gegensatz zu einem zellenübergreifenden Öffnungsvorgang.

Sind jedoch zwei oder mehr Öffnungswerkzeuge vorgesehen, welche gleichzeitig in Betrieb sind, so können ebenfalls zwei oder mehr als zwei Zellen, d. h. mehrere Zellen, im Zellenverbund gleichzeitig geöffnet werden.

Werden die Zellen im Zellenverbund durch mindestens zwei, insbesondere gleichzeitig betriebenen Öffnungswerkzeuge geöffnet, so sind diese insbesondere elektrisch zueinander isoliert.

Das Öffnen bzw. Auftrennen einer Zelle erfolgt jeweils insbesondere entlang mindestens einer Trennlinie. Die mindestens eine Trennlinie kann derart festgelegt und das mindestens eine Öffnungswerkzeug kann derart relativ zum Zellenverbund entlang der mindestens einen Trennlinie geführt sein bzw. bewegt werden, dass ein Kurzschluss zwischen den beiden Polen einer Zelle vermieden wird.

Der Begriff "relativ geführt bzw. bewegt" bedeutet in diesem Kontext insbesondere, dass zum Öffnen der Zellen:
- das Öffnungswerkzeug bewegt wird und der Zellenverbund stationär ist,
- der Zellenverbund bewegt wird und das Öffnungswerkzeug stationär ist, oder
- sowohl das Öffnungswerkzeug als auch der Zellenverbund bewegt werden.

Die mindestens eine Trennlinie kann derart festgelegt sein und das mindestens eine Öffnungswerkzeug derart relativ zum Zellenverbund entlang der mindestens einen Trennlinie geführt bzw. bewegt werden, dass beim Öffnen der Zellen die elektrisch leitende Verbindung vom Elektrodenpaket zu mindestens einem der äusseren Pole, insbesondere die elektrisch leitenden Verbindungen zu beiden äusseren Polen durchtrennt wird.

Dies trifft insbesondere auf Ausführungsformen zu, bei welchen das Elektrodenpaket aus dem Zellengehäuse ausgestossen bzw. ausgeblasen werden soll.

Die mindestens eine Trennlinie kann insbesondere derart festgelegt und das mindestens eine Öffnungswerkzeug derart relativ zum Zellenverbund entlang der mindestens einen Trennlinie geführt bzw. bewegt werden, dass das Öffnungswerkzeug bzw. dessen Trennorgan während des Öffnungsvorganges maximal einen Kontakt zu einem elektrischen Leiter zwischen einem Elektrodenpakt und einem äusseren Pol gleichzeitig herstellt.

Dies gilt insbesondere bezüglich der elektrischen Leiter einer einzelnen Zelle kann aber auch bezüglich der elektrischen Leiter verschiedener Zellen gelten.

Das Öffnungswerkzeug kann ein Trennorgan enthalten, welches während des Öffnungsvorganges parallel zu den Stirnwänden und in einem Winkel zwischen 0° und 90°, insbesondere zwischen 10° und 80°, zu den Seitenwänden geführt bzw. bewegt wird.

Wird beispielsweise eine Stirnwand der Zelle abgetrennt, an welcher zum Beispiel die beiden äusseren Pole angeordnet sind, so kann das Trennorgan des Öffnungswerkzeugs während des Öffnungsvorganges parallel zu den Stirnwänden der Zellen und in einem Winkel zwischen 0° und 90°, insbesondere zwischen 10° und 80°, zu den Seitenwänden der Zellen geführt bzw. bewegt werden. Das Trennorgan kann insbesondere diagonal zum Zellenverbund geführt bzw. bewegt werden. Dadurch wird verhindert, dass das Trennorgan beim Öffnen der Zellen im Zellenverbund gleichzeitig mit den beiden elektrischen Leiter einer Zelle in Kontakt kommt.

Die mindestens eine Trennlinie kann derart festgelegt und das mindestens eine Öffnungswerkzeug kann derart relativ zum Zellenverbund entlang der mindestens einen Trennlinie geführt bzw. bewegt werden, dass das Öffnungswerkzeug in einen Spalt zwischen der Gehäusewand und dem Elektrodenpaket eingreift. Auf diese Weise wird eine Beschädigung des Elektrodenpakets durch das Öffnungswerkzeug vermieden.

Gemäss einer besonderen Weiterbildung des Verfahrens kann mittels einer Scan-Einrichtung eine optimale Öffnungsstelle bzw. Trennlinie an der Zelle ermittelt bzw. detektiert werden, welche zum Öffnen der Zelle z. B. mittels eines Öffnungswerkzeuges am geeignetsten ist. Die detektierten Informationen der Scan-Einrichtung zu einer geeigneten Öffnungsstelle können z. B. von der Scan-Einrichtung an die Öffnungseinrichtung übermittelt werden, welche aufgrund dieser Information eine geeignete Trennlinie ermittelt.

Es ist nämlich ein Ziel, beim Öffnen der Zelle die innere Struktur der Zelle und insbesondere das Elektrodenpaket möglichst nicht zu beschädigen. Mittels der Scan-Einrichtung können nun beispielsweise Leerräume, wie Spaltlücken, zwischen dem Elektrodenpaket und der Gehäusewand detektiert werden. Solche Stellen an der Gehäusewand eignen sich besonders gut zum Öffnen der Zellen, da hier das in das Zelleninnere eindringende Öffnungswerkzeug nicht unmittelbar auf das Elektrodenpaket trifft.

Die Leerräume werden dabei indirekt, durch das Detektieren der festen Komponenten des Elektrodenpakets im inneren der Zelle und der Gehäusewand detektiert. Die Leerräume können mit einem Elektrolyten gefüllt oder Hohlräume sein.

Da sich die geeigneten Öffnungsstellen der Zellen eines bestimmten Batterie- bzw. Zellentyps üblicherweise immer an derselben Stelle befinden, ist es in der Regel ausreichend, wenn die geeignete Öffnungsstelle mittels der Scan-Einrichtung für jeden Batterie- bzw. Zellentyp nur einmal ermittelt wird.

Der Scanner der Scan-Einrichtung kann beispielsweise mittels Röntgentechnik betrieben werden. Die Zellen werden hierzu mit Röntgenstrahlung bestrahlt. Röntgenverfahren und deren Funktionsweise sind aus dem Stand der Technik bekannt und werden an dieser Stelle daher nicht näher beschrieben. Röntgentechnik wird beispielsweise in der Medizinaltechnik sowie in der Sicherheitstechnik (Gepäckscanner) eingesetzt. Wird ein bildgebendes Verfahren angewendet so kann beispielsweise Computertomographie eingesetzt werden.

Der Scanner kann beispielsweise auch mittels Kernspinresonanz-Technologie (Nuclear Magnetic Resonance, NMR) betrieben werden. Auch diese Technologie ist aus dem Stand der Technik bekannt und wird an dieser Stelle daher nicht näher beschrieben. Kernspinresonanz-Technologie (NMR) wird beispielsweise in der Medizinaltechnik verwendet (Bestimmung von Kernspin-Relaxationszeiten). Wird ein bildgebendes Verfahren eingesetzt, so kann beispielsweise Magnetresonanztomographie bzw. Kernspintomographie (MRT/MRI) Anwendung finden.

Die Zellengehäuse sind insbesondere zylinderförmig und weisen jeweils mindestens eine, insbesondere zwei, einander gegenüber liegende Stirnwände auf.

Das Zylindergehäuse wird insbesondere entlang einer, die Stirnwand umlaufenden Trennlinie geöffnet.

Die Stirnwände sind über eine Mantelfläche bzw. Seitenwände miteinander verbunden. Die beiden Stirnwände verlaufen insbesondere parallel zueinander. Die äusseren Pole sind insbesondere an einer (prismatische Zelle) oder beiden (Rundzelle) Stirnwänden angeordnet.

Das zylinderförmige Zellengehäuse kann zum Beispiel kreiszylinderförmig sein. Die Zellen sind dann insbesondere Rundzellen. Rundzellen zeichnen sich insbesondere dadurch aus, dass auf den beiden Stirnwänden jeweils einer der beiden äusseren Pole angeordnet ist.

Das zylinderförmige Zellengehäuse kann prismenförmig, insbesondere quaderförmig sein. Die Zellen sind insbesondere prismatische Zellen. Die Zellengehäuse weisen insbesondere zwei einander gegenüberliegende Stirnwände sowie Seitenwände auf.

Prismatische Zellen zeichnen sich insbesondere dadurch aus, dass die beiden äusseren Pole auf einer der beiden Stirnwände angeordnet sind.

Bei zylinderförmigen Zellen umläuft beispielsweise mindestens eine Trennlinie mindestens eine Stirnwand. So kann eine Trennlinie eine der beiden Stirnwände umlaufen, insbesondere geschlossen umlaufen. Dies ist dann z. B. der Fall, wenn das Zellengehäuse nur auf einer Stirnseite geöffnet und das Elektrodenpaket über die eine geöffnete Stirnseite aus dem Zellengehäuse herausgezogen wird.

Es ist auch möglich, dass beide Stirnwände von jeweils einer Trennlinie umlaufen werden, insbesondere geschlossen umlaufen werden. Dies ist dann z. B. der Fall, wenn das Zellengehäuse auf beiden Stirnseiten geöffnet und das Elektrodenpaket über die geöffneten Stirnseiten aus dem Zellengehäuse ausgestossen bzw. ausgeblasen wird.

Gemäss einer Ausführungsform umläuft eine erste Trennlinie eine erste Wand, insbesondere erste Stirnwand, und eine zweite Trennlinie eine zweite Wand, insbesondere zweite Stirnwand, des Zellengehäuses, welche der ersten Wand gegenüber liegt. Beim Auftrennen des Zellengehäuses entlang der Trennlinien werden die beiden gegenüberliegenden Wände vom Zellengehäuse wenigstens teilweise, insbesondere vollständig, abgetrennt. Die beiden abgetrennten Wände geben zwei offene Seiten des Zellengehäuses frei. Die äusseren Pole sind insbesondere an einer oder an beiden, aufzutrennenden Wänden angeordnet.

Gemäss dieser Ausführungsform kann nun ein Ausstosswerkzeug über die eine offene Seite auf das Elektrodenpaket einwirken und so das Elektrodenpaket über die andere, gegenüberliegende Seite aus dem Zellengehäuse ausstossen. Ebenso kann das Elektrodenpaket ausgeblasen werden.

Gemäss einer weiteren Ausführungsform sind die beiden äusseren Pole an einer Wand, insbesondere Stirnwand des Zellengehäuses angeordnet, wobei die mindestens eine Trennlinie derart festgelegt und das mindestens eine Öffnungswerkzeug derart relativ zum Zellenverbund entlang der mindestens einen Trennlinie geführt bzw. bewegt werden, dass die Wand mit den beiden äusseren Polen vollständig vom Zellengehäuse abgetrennt wird, derart, dass die Wand zusammen, das heisst als Einheit, mit dem über Polverbindungen mit der Wand verbundenen Elektrodenpaket aus dem Zellengehäuse entnommen, insbesondere herausgezogen werden kann.

Das Elektropaket kann bei beiden Ausführungsformen auch mittels Schwerkraftunterstützung aus dem Zellengehäuse entnommen werden.

Hierzu wird der Zellenverbund derart in der Öffnungseinrichtung positioniert, dass die Entnahmeöffnung bzw. die offene Seite in Schwerkraftrichtung nach unten weist. Es ist möglich, dass die Zellen bzw. der Zellenverbund erst nach dem Öffnen der Zellen entsprechend positioniert wird. Es ist auch möglich, dass die Zellen bereits auf einer in Schwerkraftrichtung nach unten weisenden Seite geöffnet werden. Die schwerkraftunterstütze Entnahme der Elektropakete kann durch Rütteln des Zellenverbundes weiter unterstützt werden.

Ferner kann das Elektropaket, wie weiter unten beschrieben, bei beiden Ausführungsformen auch mittels Unterdruck bzw. Vakuum aus dem Zellengehäuse entnommen werden.

Das Öffnungswerkzeug enthält insbesondere ein Trennorgan. Das Trennorgan kann beim Öffnen der Zellen senkrecht zur abzutrennenden Wand geführt sein. Das Trennorgan kann auch parallel zur abzutrennenden Wand geführt sein.

Die Trennlinien sind im Zellenverbund insbesondere derart festgelegt und das mindestens eine Öffnungswerkzeug wird insbesondere derart relativ zum Zellenverbund entlang der Trennlinien geführt bzw. bewegt, dass ein Kurzschluss zwischen Zellen im Zellenverbund, welche elektrisch leitend miteinander verbunden sind, vermieden bzw. verhindert wird.

So kann vorgesehen sein, dass die elektrischen Verbindungen zwischen den Zellen, die so genannten Zellverbinder für den Öffnungs- und Entnahmevorgang nicht entfernt bzw. durchtrennt werden. Dadurch fallen beim Abtrennen von Poldeckeln, d.h. heisst von Gehäusewänden mit äusseren Polen, weniger Einzelteile an. So fallen beim Abtrennen der Poldeckeln jeweils Einheiten umfassend wenigstens zwei Poldeckeln mit dem diese verbindenden Zellverbinder an.

Allerdings kann auch vorgesehen sein, dass vor dem Öffnen der Zellen im Zellenverbund die elektrischen Verbindungen zwischen den Zellen, welche beispielsweise eine Reihen- oder Parallelschaltung zwischen den Zellen herstellen, unterbrochen werden.

Das Unterbrechen der elektrischen Verbindungen kann vor oder nach der Entnahme des Zellverbundes aus der Batterie und insbesondere in der Öffnungseinrichtung erfolgen. Das Unterbrechen der elektrischen Verbindungen erfolgt z. B. mittels Durchtrennen der elektrischen Leiter.

Das Öffnen der Zellengehäuse kann z. B. mittels einem der folgenden Öffnungs- bzw. Trennverfahren erfolgen:
- spanendes Verfahren, wie Fräsen, Sägen oder Schleifen,
- Schneiden,
- Wasserstrahlschneiden,
- Laserstrahlschneiden,
- Elektronenstrahlschneiden.

Beim Öffnungs- bzw. Trennverfahren wird das Zellengehäuse insbesondere entlang einer Trennlinie aufgetrennt.

Das Öffnungs- bzw. Trennverfahren zeichnet sich insbesondere durch eine definierte Öffnungs- bzw. Trenngeometrie aus.

Es ist allerdings auch denkbar, dass das Öffnen der Zellen nicht nach einer definierten Öffnungsgeometrie erfolgt. Dies wäre beispielsweise bei einem unkontrollierten Aufreissen des Zellengehäuses der Fall.

Das mindestens eine Öffnungswerkzeug wird insbesondere über eine Steuerungseinrichtung gesteuert, derart, dass das mindestens eine Öffnungswerkzeug die Zellengehäuse der Zellen im Zellenverbund entlang mindestens einer vordefinierten Trennlinie öffnet, das heisst auftrennt.

Die Öffnungseinrichtung kann zum Beispiel als CNC-Maschine (Computerized Numerical Control) ausgelegt sein.

Das mindestens eine Öffnungswerkzeug kann auf Basis von hinterlegten Kenndaten zum Aufbau bzw. Geometrie der Zellen bzw. des Zellenverbundes sowie der dazugehörigen, vordefinierten Trennlinien mittels Steuerungseinrichtung gesteuert werden.

Es ist auch möglich, dass das Öffnungswerkzeug auf Basis von in Echtzeit ermittelten Informationen, z. B. optischen Informationen, zu den Zellen bzw. zum Zellenverbund mittels der Steuerungseinrichtung gesteuert wird. Optische Informationen bzw. Daten zu den Zellen bzw. zum Zellenverbund können z. B. über eine optische Detektorvorrichtung, wie Kamera oder Laser (Laserabtastung) ermittelt werden. So kann beispielsweise einer optischen Detektorvorrichtung die Geometrie des Zellenverbundes bzw. der Zellen ermittelt werden. Auf Basis der ermittelten Geometrien können dann die Trennlinien zum Öffnen der Zellen festgelegt werden.

Gemässe einer Weiterbildung des Verfahrens wird vor dem Öffnen der Zellen mindestens eine von folgenden Informationen ermittelt:
- Batterie-Typ
- Aufbau des Zellenverbundes
- Zellenverbund-Typ
- Aufbau der Zellen
- Zellen-Typ.

Die oben genannten Informationen können z. B. mit Hilfe von optischen Daten bzw. Informationen einer optischen Detektiervorrichtung ermittelt werden.

Auf der Grundlage der mindestens einen ermittelten Information kann ein zu der ermittelten mindestens einen Informationen passendes Zellenöffnungsprogramm bereitgestellt werden.

Das Zellenöffnungsprogramm ist als Sammelbegriff für elektronische Daten zu verstehen, welche zum Steuern des Öffnungswerkzeuges zwecks Öffnen der Zellen benötigt werden.

Die oben genannten Schritte können mittels der Steuerungseinrichtung durchgeführt werden.

Die Steuerungseinrichtung steuert das mindestens eine Öffnungswerkzeug mittels Kenndaten, welche durch das Zellenöffnungsprogramm bereitgestellt werden.

Das Zellenöffnungsprogramm enthält insbesondere Kenndaten zu den durch das mindestens eine Öffnungswerkzeug entlang zu fahrenden Trennlinien an den Zellen.

Das Zellenöffnungsprogramm ist insbesondere eine Software, welche dazu ausgelegt ist, das Öffnungswerkzeug über die Steuerungseinrichtung zu steuern.

Die Elektrodenpakete werden insbesondere mittels mindestens einem Entnahmewerkzeug einer Entnahmevorrichtung aus den geöffneten Zellgehäusen entnommen. Das mindestens eine Entnahmewerkzeug kann mittels Steuerungseinrichtung gesteuert werden.

Die Elektrodenpakte werden z. B. aus den geöffneten Zellgehäusen entnommen sobald sämtliche Zellen eines Zellenverbundes geöffnet sind. Es ist auch denkbar, dass die Elektrodenpakete während des Öffnens der Zellen im Zellenverbund sukzessive aus den geöffneten Zellengehäusen entnommen werden. Das heisst, es können bei einem Zellenverbund gleichzeitig Zellen geöffnet sowie Elektrodenpakete aus bereits geöffneten Zellengehäusen entnommen werden.

Die Elektrodenpakete eines Zellenverbundes können gleichzeitig oder nacheinander in Gruppen oder nacheinander einzeln aus den Zellen entnommen werden.

Die Elektrodenpakete können mittels mindestens einem Ziehwerkzeug aus den geöffneten Zellengehäusen im Zellenverbund herausgezogen werden.

Diese Methode kommt z. B. zum Einsatz, wenn nur eine Wand, z. B. eine Stirnwand, der Zelle geöffnet wird. Das Ziehwerkzeug kann einen Greifer zum Greifen des Elektrodenpakets bzw. eines mit diesem verbundenen Poldeckels (Gehäusewand mit Pol) enthalten.

Die Elektrodenpakete können auch mit Hilfe einer Unterdruckvorrichtung mittels Unterdruck bzw. Vakuum aus den geöffneten Zellengehäusen entnommen, d.h. herausgezogen bzw. herausgesogen werden. So kann auch ein Saugnapf zum Einsatz kommen.

Die Elektrodenpakete können mittels mindestens einen Ausstosswerkzeuges aus den geöffneten Zellengehäusen im Zellenverbund ausgestossen werden.

Diese Methode kommt z. B. zum Einsatz, wenn zwei gegenüberliegende Wände, z. B. die Stirnwände, der Zelle geöffnet werden.

Das Ausstossen kann über einen Ausstosskontakt erfolgen, z. B. über einen Stössel oder Flüssigkeitsstrahl.

Das Ausstossen kann auch kontaktlos, z. B. über Druckgas, insbesondere einen Gasstrahl, erfolgen.

Die Elektrodenpakete werden dabei aus den Zellengehäusen ausgeblasen.

Das Druckgas kann z.B. ein Inertgas sein. Dadurch wird verhindert, dass Stoffe der Zelle, wie z. B. Aktivmaterialien, mit Sauerstoff reagieren.

Das Druckgas kann auch Druckluft sein.

Die Elektroden des Elektrodenpakets sind insbesondere flächenförmig und ganz besonders bandförmig. Die elektrisch leitenden Träger (Elektrodenträger) der Elektroden sind insbesondere flächenförmig und ganz besonders bandförmig.

Die Elektrodenpakete enthalten insbesondere Separatoren, welche insbesondere flächenförmig und ganz besonders bandförmig sind.

Die Elektroden umfassen eine Anode und eine Elektrode, wobei eine oder mehrere der folgenden Eigenschaften zutrifft:
- die Anode ist ein Anodenband und der Anodenträger ist ein Anodenträgerband;
- die Kathode ist ein Kathodenband und der Kathodenträger ist ein Kathodenträgerband;
- der Separator ist ein Separatorenband.

Bei gefalteten Elektrodenpaketen können beispielsweise nur die Separatoren als Bandkomponenten ausgebildet sein, während die Elektroden z.B. als Blätter ausgebildet sind.

Die einzelnen Komponenten des Elektrodenpakets, wie Separatoren und Elektroden, liegen insbesondere als (beschichtete) Folien vor. Die entsprechenden Elektrodenträger liegen entsprechend ebenfalls insbesondere als Folien vor. Die Folien können z. B. eine Dicke von 100 Mikrometern oder weniger aufweisen.

Die Elektrodenpakete der Zellen können gewickelt, gestapelt oder gefaltet sein.

Gemäss einer Weiterbildung der Erfindung wird nach dem Öffnen der Zellen und vor Entnahme des ausgeräumten Zellenverbundes aus der Öffnungseinrichtung auch der Elektrolyt aus den geöffneten Zellen entnommen.

Die Entnahme des Elektrolyten kann ebenfalls über die Steuerungseinrichtung gesteuert, d.h. automatisiert erfolgen. Die Entnahme des Elektrolyten kann vor der Entnahme der Elektrodenpakete erfolgen. Die Entnahme des Elektrolyten kann nach der Entnahme der Elektrodenpakete erfolgen.

Ein flüssiger bzw. fliessfähiger Elektrolyt kann z. B. über eine Saugeinrichtung aus den Zellengehäusen abgesaugt werden.

Die Entnahme des Elektrolyten aus den geöffneten Zellen kann unter Unterdruckbedingungen, wie Vakuum, erfolgen.

Das heisst, es ist auch möglich, dass zwecks Entnahme des Elektrolyten aus den geöffneten Zellen eine Unterdruckumgebung, wie Vakuum, auf den Zellenverbund in der Öffnungseinrichtung aufgebaut wird. Die Unterdruckumgebung sorgt für eine beschleunigte Überführung des Elektrolyten in die Gasphase. Der gasförmige Elektrolyt kann aus der Öffnungseinrichtung weggeführt und einer Rückgewinnungseinrichtung, z. B. mittels einer Kühlfalle, durch Kondensation zurückgewonnen werden. Ausfällungen, wie Salze, aus dem Elektrolyten bleiben im Zellengehäuse als Feststoff zurück.

Zur Entnahme des Elektrolyten kann auch Druckgas, wie Inertgas oder Druckluft angewendet werden.

Die Zellen des Zellenverbundes können in der Öffnungsvorrichtung unter inerter Atmosphäre geöffnet werden.

Die inerte Atmosphäre kann aus reaktionsträgen bzw. nichtreaktiven Gasen bzw. Gasgemischen, wie Edelgas (z. B. Helium) oder Stickstoff bestehen oder solche Gase zum grössten Teil enthalten. Die inerte Atmosphäre soll oxidative Prozesse oder anderweitige chemische Reaktionen mit Bestandteilen der Atmosphäre beim Öffnen der Zellen verhindern.

Die Zellen des Zellenverbundes können in der Öffnungseinrichtung in einem Flüssigkeitsbad, insbesondere Wasserbad, geöffnet werden.

Das Flüssigkeitsbad soll einerseits oxidative Prozesse oder anderweitige chemische Reaktionen beim Öffnen der Zellen verhindern. Andererseits dient das Flüssigkeitsbad dem Herauslösen des Elektrolyten aus den Zellengehäusen. So kann der aus den Zellengehäusen herausgelöste Elektrolyt zusammen mit der Trägerflüssigkeit des Flüssigkeitsbades einer Rückgewinnungseinrichtung zugeführt, werden, in welcher der Elektrolyt oder Teile davon, wie Salze, von der Trägerflüssigkeit separiert wird.

Die aus den Zellen entnommenen Elektrodenpakete werden insbesondere mittels einer Trenneinrichtung in die einzelnen Komponenten, insbesondere Bandkomponenten, wie Anode, insbesondere Anodenband, Kathode, insbesondere Kathodenband und Separator, insbesondere Separatorenband separiert.

Die Kathode, insbesondere das Kathodenband, wird insbesondere in einer Ablöse- bzw. Separiereinrichtung, behandelt und das Aktivmaterial wird vom Kathodenträger, insbesondere vom Kathodenträgerband abgelöst bzw. getrennt.

Die Anode, insbesondere das Anodenband, wird insbesondere in einer Ablöse- bzw. Separiereinrichtung, behandelt und das Aktivmaterial wird vom Anodenträger, insbesondere vom Anodenträgerband abgelöst bzw. getrennt.

So können im direkten Recyclingverfahren insbesondere die folgenden Stoffe in grosser Reinheit zurückgewonnen und separat gesammelt werden:
- Verbund aus leeren Zellengehäusen;
- ein oder mehrere Separatoren, insbesondere Separatorenbänder;
- Aktivmaterial der Kathode;
- Kathodenträger, insbesondere Kathodenträgerband;
- Aktivmaterial der Anode;
- Anodenträger, insbesondere Anodenträgerband;
- Elektrolyt.

Die Erfindung betrifft auch eine Anlage zur Durchführung des oben beschriebenen Verfahrens. Die Anlage enthält erfindungsgemäss eine Öffnungseinrichtung mit einer Aufnahme zur Aufnahme eines Zellenverbundes sowie insbesondere mit mindestens einem Öffnungswerkzeug zum Öffnen der Zellen in einem Zellenverbund.

Die Öffnungseinrichtung kann eine Ausrichtvorrichtung zum Ausrichten des Zellenverbundes in der Aufnahme der Öffnungseinrichtung enthalten. Die Ausrichtvorrichtung dient der Ausrichtung bzw. Positionierung des Zellenverbundes in der Öffnungseinrichtung. Dies erleichtert ein computergesteuertes Öffnen der Zellen.

Die Öffnungseinrichtung kann eine Fixiervorrichtung zum Fixieren des Zellenverbundes in der Aufnahme der Öffnungseinrichtung enthalten. Die Fixiervorrichtung dient der Beibehaltung der Position des Zellenverbundes in der Öffnungseinrichtung auch bei einer mechanischen Bearbeitung des Zellenverbundes.

Das mindestens eine Öffnungswerkzeug kann ein:
- spanendes Werkzeug, wie Fräswerkzeug, Sägewerkzeug oder eine Trennscheibe, oder ein
- Schneidwerkzeug
sein.

Das Öffnungswerkzeug enthält insbesondere ein Trennorgan. Das Trennorgan kann elektrisch isolierend ausgebildet sein und z. B. aus Kunststoff oder Keramik bestehen. Das Trennorgan kann gegenüber dem restlichen Öffnungswerkzeug elektrisch isoliert sein.

Das Trennorgan kann eine Klinge, ein Sägekörper, Fräskörper, Wasser-, Laser- oder Elektronenstrahl sein.

Ein Schneidwerkzeug umfasst ein Schneidmittel, wie z. B. eine Schneidklinge, ein Flüssigkeitsstrahl, ein Laserstrahl oder ein Elektronenstrahl.

Die Anlage enthält ferner insbesondere eine Steuerungseinrichtung zum Steuern des mindestens einen Öffnungswerkzeuges.

Die Anlage enthält ferner insbesondere eine Entnahmevorrichtung zum Entnehmen der Elektrodenpakete aus den geöffneten Zellen. Die Entnahmevorrichtung kann Teil der Öffnungseinrichtung sein.

Die Entnahmevorrichtung kann z. B. eine Ausstosseinrichtung zum Ausstossen der Elektrodenpakete aus den geöffneten Zellen enthalten.

Die Ausstosseinrichtung enthält insbesondere mindestens ein Ausstosswerkzeug, wie Stössel.

Die Ausstosseinrichtung kann zum kontaktlosen Ausstossen der Elektrodenpakete aus den geöffneten Zellen mittels Druckgas, z. B. mittels eines Gasstrahls, wie Druckluftstrahl, ausgelegt sein.

Die Ausstosseinrichtung kann zum Ausstossen der Elektrodenpakete aus den Zellen mittels eines Flüssigkeitsdrucks, z. B. mittels eines Flüssigkeitsstrahls, wie Wasserstrahls, ausgelegt sein.

Da die Zerlegung der Batterie in ihre einzelnen Komponenten ein zentraler Aspekt des direkten Recycling-Verfahrens ist, stand bis anhin auch die Zerlegung des Zellenverbundes in die einzelnen Zellen ausser Frage. So bestand bis anhin lediglich das Bestreben, das Vereinzeln der Zellen möglichst effizient und wirtschaftlich zu gestalten. Schliesslich soll gerade die Trennung in die ursprünglichen Ausgangskomponenten die unversehrte Rückgewinnung der Wertstoffe in hoher Reinheit gewährleisten.

Die vorliegende Erfindung basiert nun auf der Erkenntnis, dass die Zerlegung des Zellenverbundes im direkten Recycling-Verfahren nicht notwendig ist und trotzdem die Rückgewinnung der Wertstoffe in gleicher Qualität wie bei der Zerlegung des Zellenverbundes in die einzelnen Zellen möglich ist.

Dies rührt daher, dass auch beim Vereinzeln der mittels Klebstoff bzw. Vergussmassen zu einem Zellenverbund verklebten Zellen weiterhin Klebstoff bzw. Vergussmasse an den Zellengehäusen haften bleibt. Die Entfernung dieser Klebstoffreste bzw. Vergussmassenreste von den Zellengehäusen, zwecks Materialtrennung ist jedoch kaum praktikabel. So sind bekannte Verfahren äussert umständlich, unwirtschaftlich und in der Regel nur durch Einsatz von problematischen Chemikalien, wie Lösungsmitteln, möglich.

Da die Klebstoffe bzw. Vergussmassen, deren Struktur beim Separieren und Ablösen ohnehin zerstört wird, in der Regel nicht wiederverwertbar sind, müssen diese thermisch beseitigt werden, z. B. in einer Verbrennungsanlage. Bestehen die Zellengehäuse aus Kunststoff, so müssen diese in der Regel ebenfalls thermisch beseitig werden, da diese mit den anhaftenden Klebstoff- und Vergussmassenresten nicht sortenrein sein.

Aus dieser Erkenntnis heraus hat sich der Erfindungsgedanken herausgebildet, die Zellen im Verbund zu öffnen und auszuräumen, d.h. die Elektrodenpakete und den Elektrolyten aus den Zellengehäusen zu entnehmen, und die ausgeräumten Zellengehäuse im Verbund der weiteren Verwertung zuzuführen.

Bestehen die Zellengehäuse aus Metall, so können diese im Verbund eingeschmolzen werden. Beim Einschmelzen werden auch gleich die Klebstoff- und Vergussmassenanteile des Zellenverbundes thermisch beseitigt.

Selbst wenn die Zellengehäuse vor deren Verwertung dennoch aus dem Zellenverbund vereinzelt würden, so wäre dies nach Entnahme der Elektrodenpakete und des Elektrolyten aus den Zellengehäusen einfacher umsetzbar. Dies, weil dann die Gefahr von Kurzschlüssen oder der Beschädigung der Elektrodenpakete nicht mehr bestünde.

Das Öffnen und Ausräumen der Zellen im Zellenverbund weist zusammenfassend die folgenden Vorteile auf
- der Aufwand der Vereinzelung der Zellen aus dem Zellenverbund entfällt;
- es fallen weniger Einzelteile an, wodurch das Handling der Komponenten vereinfacht wird;
- es können mehrere Zellen gleichzeitig bzw. in einem Arbeitsschritt geöffnet und die Elektrodenpakete mehrerer Zellen gleichzeitig bzw. in einem Arbeitsschritt entnommen werden, wodurch das Verfahren effizienter wird;
- werden mehrere Zellen in einem automatisierten Verfahren geöffnet und die Elektrodenpakete automatisiert entnommen, so brauchen die Zellen im Zellenverbund nicht mehr gegenseitig ausgerichtet zu werden;
- die (thermische) Entsorgung der Klebstoffe und Vergussmassen kann zusammen mit der Wiederverwertung bzw. (thermischen) Entsorgung der Zellengehäuse in einem gemeinsamen Prozess erfolgen.
- es werden nur die wertvollen, lohnenswerten Materialien der Elektrodenpakete direkt recycliert, das heisst über zusätzliche, vergleichsweise arbeitsintensive Trennschritte vorab separiert. Die weniger wertvollen Materialien der ausgeräumten Zellenverbunde, wie Kunststoffe oder gängige Metalle, werden mit weniger Aufwand indirekt thermisch oder durch Shreddern recycliert.

Nachfolgend wird der Erfindungsgegenstand anhand von Ausführungsbeispielen, welche in den beiliegenden Figuren dargestellt sind, näher erläutert. Es zeigen jeweils schematisch:
- Figur 1:: ein Flussdiagramm zum erfindungsgemässen Recycling-Verfahren;
- Figur 2a-2g:: eine erste Ausführungsform zum erfindungsgemässen Verfahren;
- Figur 3:: eine alternative Ausführungsvariante eines Öffnungsvorganges;
- Figur 4:: eine gewickeltes Elektrodenpaket;
- Figur 5a-5c:: eine zweite Ausführungsform zum erfindungsgemässen Verfahrens.

Grundsätzlich sind in den Figuren gleiche Teile mit gleichen Bezugszeichen versehen.

Für das Verständnis der Erfindung sind gewisse Merkmale in den Figuren nicht oder nur sehr stark abstrahiert dargestellt. Die nachfolgend beschriebenen Ausführungsbeispiele stehen lediglich beispielhaft für den Erfindungsgegenstand.

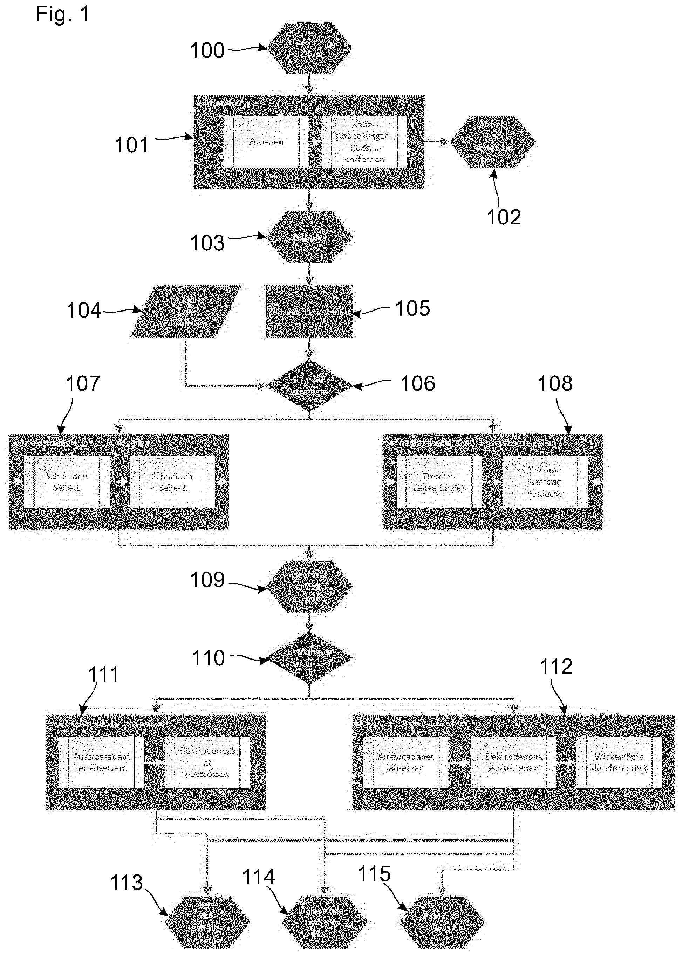

Das Prozessschema zu **Figur 1** veranschaulicht beispielhaft einen möglichen Ablauf von Prozessschritten im Zusammenhang mit dem erfindungsgemässen Verfahren. Die Batterie bzw. das Batteriesystem 100 wird in einem ersten vorbereitenden Schritt 101 entladen. Dies ist jedoch kein zwingender Schritt der vorliegenden Erfindung.

Ferner wird das Batteriegehäuse geöffnet und es werden die Abdeckungen sowie die Elektronik (PCB's) und Kabel entfernt. Kabel, Elektronik und Gehäuseteile, wie Abdeckungen, werden in einem Entsorgungsschritt 102 der Entsorgung bzw. Wiederverwertung zugeführt.

In einem nächsten Schritt 103 werden die Zellenverbunde, auch Zellstack genannt, freigelegt.

Zur Vermeidung von Kurzschlüssen wird in einem Prüfschritt 105 die Zellenspannung geprüft und sichergestellt, dass die Zellen eine Maximalspannung nicht überschreiten. Gegebenenfalls wird eine Entladung der Zelle durchgeführt. Auch dies ist jedoch kein zwingender Schritt der vorliegenden Erfindung.

In einem Ermittlungsschritt 104 wird der Batterie-Typ bzw. der Zellen-Typ und der Aufbau des Zellenverbundes ermittelt.

Auf Basis der im Ermittlungsschritt 104 ermittelten Informationen zu den Zellen bzw. zum Zellenverbund wird in einem weiteren Schritt 106 die Öffnungsstrategie für die Zellen festgelegt.

Zum Öffnen der Zellen wird der Zellenverbund einer Öffnungseinrichtung zugeführt. Die Zellen werden nun im Zellenverbund anhand der festgelegten Öffnungsstrategie in der Öffnungseinrichtung geöffnet. Das Öffnen der Zellen erfolgt z. B. durch Aufschneiden der Zellengehäuse.

Die beiden häufigsten Zellentypen sind einerseits die Rundzellen, die an den beiden Stirnseiten (bzw. -wänden) je einen äusseren Pol aufweisen, welche die sogenannten Poldeckel bilden. Ein weiterer häufiger Zellentyp sind die prismatischen Zellen. Diese zeichnen sich durch die Anordnung der beiden äusseren Pole auf einer gemeinsamen Stirnseite (bzw. -wand) aus.

Da die aus den Zellengehäusen zu entnehmenden Elektrodenpakete über die äusseren Pole mit dem Zellengehäuse mechanisch verbunden sind, hängt die gewählte Öffnungsstrategie massgeblich von der Anordnung der äusseren Pole am Zellegehäuse ab.

Bei den Rundzellen besteht die Öffnungsstrategie 107 darin, die beiden einander gegenüberliegenden Poldeckel (Stirnwände mit den Polen) mittels eines Öffnungswerkzeugs vollständig vom Zellengehäuse abzutrennen, wobei auch die elektrisch leitende Verbindung (Polverbindung) zum Elektrodenpaket getrennt wird. Die Zellverbinder zwischen den Zellen werden insbesondere nicht getrennt.

Bei den prismatischen Zellen besteht die Öffnungsstrategie 108 darin, in einem ersten Schritt die Zellverbinder zwischen den Zellen zu trennen. In einem weiteren Schritt wird der Poldeckel (Stirnwand mit den beiden Polen) entlang ihres Umfanges vom Gehäuse abgetrennt, ohne jedoch die elektrisch leitenden Verbindungen (Polverbindungen) zum Elektrodenpaket durchzutrennen.

Es liegt nun der Zellenverbund 109 mit den geöffneten Zellen vor. In einem weiteren Schritt wird die Entnahme der Elektrodenpakete in die Wege geleitet, welche wiederum gemäss einer vorab festzulegenden Entnahmestrategie 110 ausgeführt wird. Die Entnahmestrategie hängt wiederum massgeblich vom Zellen-Typ und der damit einhergehenden Öffnungsstrategie ab.

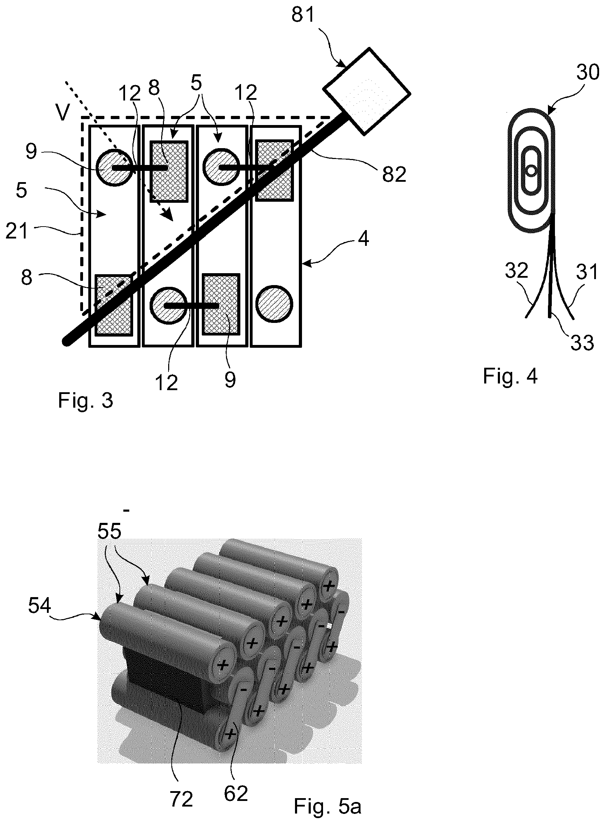

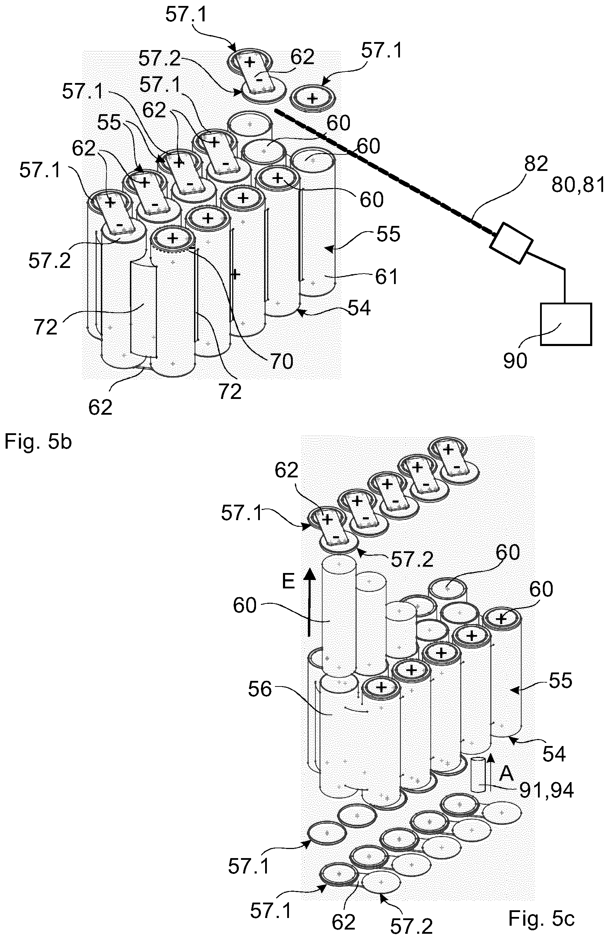

So werden die Elektrodenpakete der gemäss der ersten Öffnungsstrategie 107 beidseitig geöffneten (Rund-)Zellen gemäss einem ersten Entnahmeverfahren 111 ausgestossen (siehe auch Figuren 5a bis 5c).

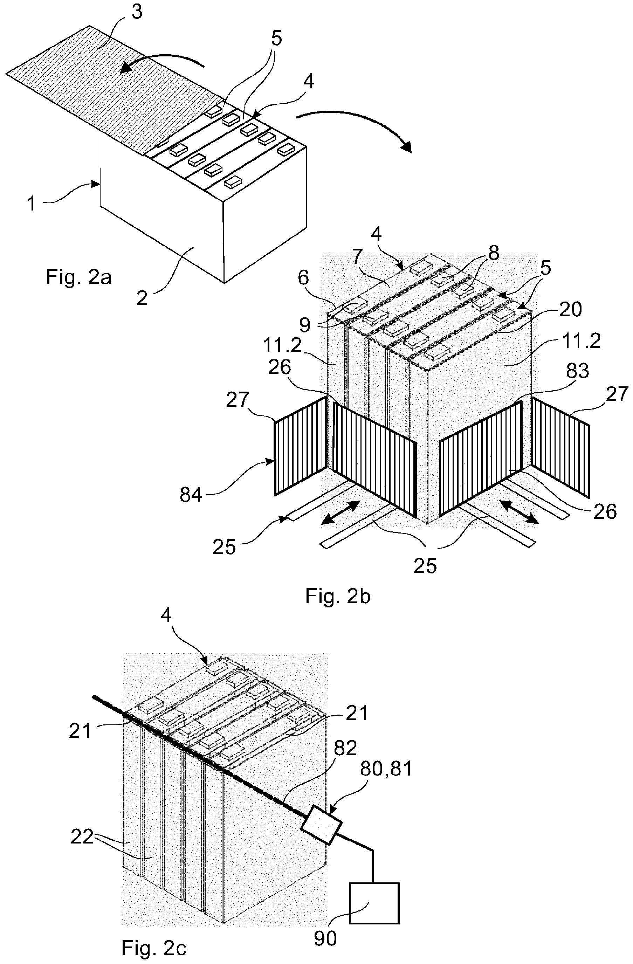

Die Elektropakete der gemäss der zweiten Öffnungsstrategie 108 einseitig geöffneten prismatischen Zellen können nicht ausgestossen werden, sondern werden gemäss einem zweiten Entnahmeverfahren 112 aus den Zellengehäusen herausgezogen (siehe auch Figuren 2a bis 2g). Da hier der Poldeckel beim Öffnen der Zelle nicht vom Elektrodenpaket abgetrennt wurde, kann dieses am Poldeckel aus dem Zellengehäuse herausgezogen werden. Die Poldeckel werden im Anschluss an die Entnahme der Elektrodenpakete von den Elektrodenpaketen abgetrennt.

Die Entnahme des Elektrolyten kann ebenfalls Teil der jeweiligen Entnahmestrategie sein.

Die Elektrodenpakete 114, die Poldeckel 115 und die Verbunde aus leeren Zellengehäusen 113 werden nun voneinander getrennt der Wiederverwertung zugeführt.

Die **Figuren 2a bis 2g** zeigen ein erfindungsgemässes Verfahren zum Öffnen von prismatischen Zellen 5 im Zellenverbund 4. Die prismatischen Zellen 5 weisen zwei sich gegenüberliegende Stirnwände 11.3 (Poldeckel 7) sowie vier, die Stirnwände 11.3 miteinander verbindende Seitenwände 11.1, 11.2 auf.

Die Figur 2a zeigt die dazugehörige Batterie 1, deren Batteriegehäuse 2 durch Entfernen des Gehäusedeckels 3 geöffnet wird. Anschliessend wird der aus prismatischen Zellen 5 bestehende Zellenverbund 4 aus dem Batteriegehäuse 2 entnommen. Der Zellenverbund 4 umfasst fünf Zellen 5, welche über flächige Klebeverbindungen 22 miteinander verbunden sind (siehe auch Figur 2b). Zur Vermeidung von Kurzschlüssen werden die Zellverbinder 12 (siehe Figur 3), welche die Zellen 5 des Zellenverbundes 4 in Reihenschaltung miteinander verbinden, durchtrennt.

Der Zellenverbund 4 wird in der Aufnahme 83 einer Öffnungseinrichtung 80 platziert. Die Öffnungseinrichtung 80 enthält eine Ausrichte- und Fixiervorrichtung 84 zum Ausrichten und Fixieren des Zellenverbundes 4 in der Aufnahme 83 der Öffnungseinrichtung 80. Die Ausrichte- und Fixiervorrichtung 84 enthält hierzu entlang von Führungselementen 25 verschiebbare Positionierelemente 26, mittels welchen der Zellenverbund 4 gegen Begrenzungselemente 27 geschoben bzw. positioniert wird. Der positionierte Zellenverbund 4 wird zwischen den Positionierelementen 26 und den Begrenzungselementen 27 fixiert.

Grundsätzlich ist es auch denkbar, dass die Batterie, d.h. der Zellenverbund 4 zusammen mit dem Batteriegehäuse 2 in der Aufnahme 83 der Öffnungseinrichtung 80 platziert wird. Die Batterie 1 kann z. B. nach dem Platzieren sowie Ausrichten und Fixieren in der Öffnungseinrichtung 80 geöffnet und der Zellenverbund 4 zugänglich gemacht werden. Das Öffnen der Batterie 1 erfolgt entsprechend mittels der Öffnungseinrichtung, welche entsprechende Öffnungsmittel vorsehen kann (nicht gezeigt).

Die Poldeckel 7 (Stirnwände 11.3 mit den beiden äusseren Polen 8, 9) werden in der Öffnungseinrichtung 80 mittels des Trennorgans 82 eines Öffnungswerkzeugs 81 entlang von Trennlinien 20, welche die Poldeckel 7 geschlossen umlaufen, vom Zellengehäuse 6 vollständig abgetrennt (siehe Figuren 2b und 2c). Das Öffnungswerkzeug 81 wird durch eine Steuerungseinrichtung 90 gesteuert.

Zwischen dem Zellengehäuse 6 und den vom Zellengehäuse 6 abgetrennten Poldeckeln 7 wird eine Trennzone 21 ausgebildet. Die Polverbindungen 13 zwischen den äusseren Polen 8, 9 und dem Elektrodenpaket 10 werden allerdings nicht durchtrennt.

Hierzu können zuerst die mechanischen Verbindungen zwischen den Poldeckeln 7 und dem Zellengehäuse 6 entlang der aussen liegenden Paarungen von Lang- und Kurzseiten des Zellenverbundes 4 getrennt werden. Das Auftrennen entlang einer Lang- bzw. Kurzseite kann in einem einzigen Trennschritt erfolgen.

Die mechanischen Verbindungen zwischen Poldeckel 7 und Zellengehäuse 6 entlang der miteinander verbundenen Seiten zweier Zellen 5 im Zellenverbund 4 werden insbesondere in separaten Schritten getrennt. Hierzu können die einander gegenüber liegenden mechanischen Verbindungen zweier miteinander verbundenen Zellen in einem Trennschnitt getrennt werden. Die Trennlinien verlaufen den mechanischen Verbindungen entlang.

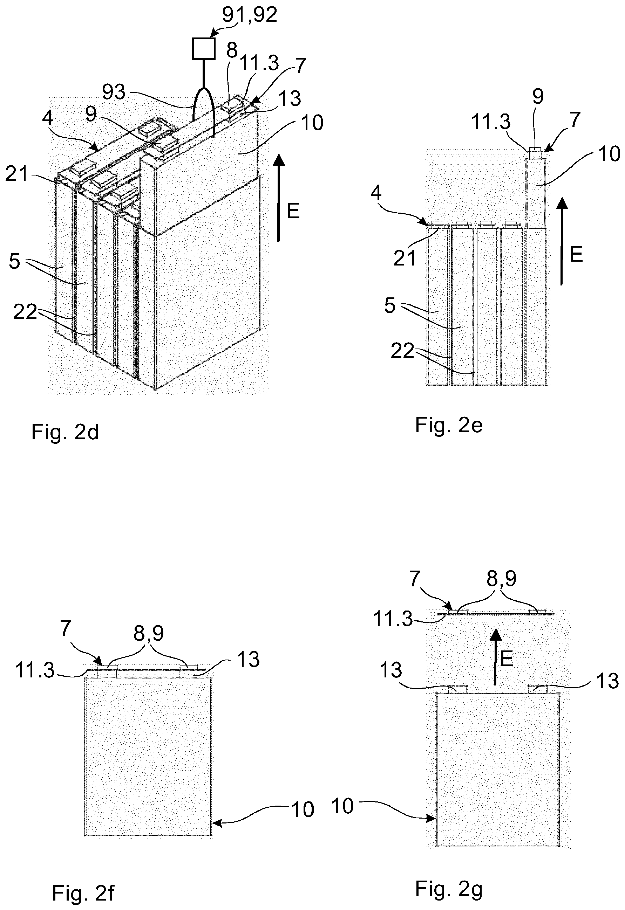

Nach dem Durchtrennen der mechanischen Verbindungen entlang der Trennlinie 20 aller vier Zellenseiten, werden die Elektrodenpakete 10 mittels eines Ziehwerkzeuges 92 einer Entnahmeeinrichtung 91 aus den geöffneten Zellengehäusen 6 herausgezogen. Das Ziehwerkzeug 92 kann hierzu ein Greiforgan 93 aufweisen. Die Elektrodenpakete 10 werden hierzu an den Poldeckeln 7 herausgezogen, an welchen die Elektrodenpakete 19 über die Polverbindungen 13 hängen (siehe Figur 2d und 2e).

Die Poldeckel 7 mit den Elektrodenpaketen 10 können dabei im Verbund oder auch jeweils einzeln (ein Poldeckel mit Elektrodenpaket) aus den Zellengehäusen 6 herausgezogen werden. Die Zellengehäuse 6 verbleiben dabei im Verbund (siehe Figur 2d und 2e).

In einem nachfolgenden Schritt werden die Polverbindungen 13, die so genannten «Tabs» zwischen dem Poldeckel 7 und dem Elektrodenpaket 10 durchtrennt. Die so separierten Teile (Poldeckel 7 und Elektrodenpaket 10) werden separat der Wiederverwertung zugeführt (siehe Figur 2f und 2g).

Die **Figur 3** zeigt eine alternative Vorgehensweise zum Abtrennen der Poldeckel 7 vom Zellengehäuse 6 bei prismatischen Zellen 5 im Zellenverbund 4, wie sie z. B. im Ausführungsbeispiel nach Figur 2a bis 2g dargestellt sind.

Nachdem die Zellenverbinder 12 zwischen den einzeln Zellen 5 des Zellenverbunds 4 getrennt wurden, werden die Poldeckel 7 zusammen mit den Polverbindungen durch das Trennorgan 82 des Öffnungswerkzeuges 81 vom Zellengehäuse 6 abgetrennt. Das längliche Trennorgan 82 wird dabei in einer diagonalen Ausrichtung quer, d.h. parallel zu den Poldeckeln 7 über den Zellenverbund 4 geführt derart, dass das Trennorgan 82 während des Öffnungsvorganges jeweils maximal mit nur einer einzelnen Polverbindung gleichzeitig in Kontakt steht. Das heisst, das Trennorgan 82 steht während des Öffnungsvorganges nie gleichzeitig in Kontakt mit den beiden Polverbindungen 8, 9 einer Zelle 5 oder mit Polverbindungen 8, 9 verschiedener Zellen 5 des Zellenverbundes 4.

Die **Figur 4** zeigt ein gewickeltes Elektrodenpaket 30 wie es z. B. in einer prismatischen Zelle 5 gemäss dem Ausführungsbeispiel nach Figur 2a bis 2g Einsatz finden kann. Das Elektrodenpaket 30 umfasst einen gewickelten Verbund, umfassend ein Kathodendband 31, ein Anodenband 32 und ein die beiden Elektrodenbänder voneinander trennendes Separatorenband 33.

Die **Figuren 5a bis 5c** zeigen ein erfindungsgemässes Verfahren zum Öffnen von Rundzellen 55 in Zellenverbund 54. Die Figur 5a zeigt einen Zellenverbund 54 mit 3 x 5 Rundzellen 55, welche über Zellhalter 72 miteinander mechanisch verbunden und gegenseitig fixiert sind. Die Rundzellen 55 umfassen jeweils zwei einander gegenüberliegende Poldeckel 57.1, 57.2 (Stirnwände mit jeweils einem Pol). Die Poldeckel 57.1, 57.2 sind über eine Mantelfläche 61 (Seitenwand) miteinander verbunden.

Die Rundzellen 55 sind alternierend orientiert (obere, mittlere und untere Reihe), d.h. die Plus- und Minuspole sind abwechselnd angeordnet. Die Rundzellen 55 des Zellenverbundes 4 sind jeweils über Zellverbinder 62 in Reihenschaltung miteinander verbunden.

Der Zellenverbund 54 wird analog zum Ausführungsbeispiel nach Figur 2a bis 2g einer Öffnungseinrichtung 80 zugeführt und in dieser geöffnet. Allerdings wird eine andere Öffnungsstrategie angewendet.

Die Figuren 5a und 5c veranschaulichen den Öffnungsvorgang. Im Gegensatz zum Ausführungsbeispiel nach Figur 2a bis 2g werden hier jeweils die beiden gegenüber liegenden Poldeckel 57.1, 57.2 zusammen mit den Polverbindungen zwischen dem jeweiligen äusseren Pol und dem Elektrodenpaket 60 mit einem Öffnungswerkzeug 81 abgetrennt. Hierzu wird das Trennorgan 82 des Öffnungswerkzeug 81 jeweils entlang der Trennlinien 70 quer über den Zellenquerschnitt, d.h. parallel zu den Poldeckeln 57.1, 57.2 geführt. Die Zellverbinder 62 zwischen jeweils zwei Rundzellen 55 werden noch nicht getrennt, so dass nach Abtrennen der Poldeckel 57.1, 57.2 vom Zellengehäuse 56 Abtrennteile in Form von Paarungen von zwei Poldeckeln 57, 1, 57.2 anfallen, welche über den Zellverbinder 62 miteinander verbunden sind. Dadurch kann die Anzahl der anfallenden Einzelteile reduziert werden.

Da die Rundzellen 55 beidseitig geöffnet werden, können die Elektrodenpakete 60 mittels des Ausstosswerkzeugs 94 einer Entnahmeeinrichtung 91 von einer Stirnwandseite her aus dem Zellengehäuse 51 ausgestossen werden. Die Zellengehäuse 56 bleiben dabei im Verbund.

Je nach geometrischen Gegebenheiten kann es notwendig sein, die Ausstossrichtung zellenindividuell festzulegen. Das heisst, die Elektrodenpakete 60 eines Zellenverbundes 54 brauchen nicht zwingend in dieselbe Richtung ausgestossen zu werden. So können die Elektrodenpakete 60 z.B. immer gegen den Minuspol der Rundzelle ausgestossen werden.

Die Poldeckel 57.1, 57.2 mit den Zellverbindern 62, die ausgestossenen Elektrodenpakete 60 und die Zellengehäuse 56 im Verbund werden gesondert dem Recycling zugeführt.

## Patentansprüche

1. **Verfahren** zum Recyceln von Batterien (1, 51), insbesondere von Lithium-Ionen-Batterien, welche jeweils mindestens einen Zellenverbund (4, 54) mit mindestens zwei Zellen (5, 55) enthalten, wobei die Zellen (5, 55) jeweils Elektrodenpakete (10, 60) mit Elektroden enthalten,
**gekennzeichnet durch** folgende Schritte:
- Bereitstellen mindestens eines Zellenverbundes (4, 54) in einer Öffnungseinrichtung (80);
- Öffnen der Zellengehäuse (6, 56) der mindestens zwei Zellen (5, 55) im Zellenverbund (4, 54), insbesondere mittels mindestens einem Öffnungswerkzeug (81) der Öffnungseinrichtung (80);
- Entnahme der Elektrodenpakete (10, 60) der mindestens zwei Zellen (5, 55) aus den Zellengehäusen (6, 56);
- Entnahme des ausgeräumten Zellenverbundes (4, 54) aus der Öffnungseinrichtung (80).

2. Verfahren nach Anspruch 1, **dadurch gekennzeichnet, dass** die Batterie (1, 51) mit dem in dieser enthaltenen mindestens einen Zellenverbund (4, 54) in der Öffnungseinrichtung (80) bereitgestellt wird.

3. Verfahren nach einem der Ansprüche 1 bis 2, **dadurch gekennzeichnet, dass** die Zellengehäuse (6, 56) der mindestens zwei Zellen (5, 55) im Zellenverbund (4, 54) in einem Arbeitsschritt geöffnet werden.

4. Verfahren nach einem der Ansprüche 1 bis 3, **gekennzeichnet durch** folgende vorangehenden Schritte:
- Öffnen der Batterie (1);
- Freilegen des mindestens einen Zellenverbundes (4, 54) der Batterie (1).

5. Verfahren nach einem der Ansprüche 1 bis 4, **dadurch gekennzeichnet, dass** das Öffnen der Zellengehäuse (6, 56) durch Auftrennen des Zellengehäuse (6, 56), insbesondere einer Gehäusewand (7, 57), entlang mindestens einer Trennlinie (20, 70) erfolgtwobei die Trennlinie (20, 70) insbesondere eine Wand (7) des Zellengehäuses (6, 56) umläuft, ganz besonders geschlossen umläuft, und das Zylindergehäuse (6, 56) entlang der die Wand (7) umlaufenden Trennlinie (20, 70) geöffnet wird.

6. Verfahren nach einem der Ansprüche 1 bis 5, **dadurch gekennzeichnet, dass** eine erste Trennlinie (70.1) eine erste Wand (57.1) und eine zweite Trennlinie (70.2) eine zweite Wand (57.2) des Zellengehäuses (56), welche der ersten Wand (57.1) gegenüber liegt, umläuft und durch das Auftrennen des Zellengehäuses (56) entlang der Trennlinien (70.1, 70.2) die beiden gegenüberliegenden Wände (57.1, 57.2) vom Zellengehäuse (56) wenigstens teilweise, insbesondere vollständig, abgetrennt werden.

7. Verfahren nach einem der Ansprüche 1 bis 6, **dadurch gekennzeichnet, dass** das mindestens eine Öffnungswerkzeug (81) ein Trennorgan (82) enthält, welches:
- senkrecht zur abzutrennenden Wand (7, 57) geführt wird, oder
- parallel zur abzutrennenden Wand (7, 57) geführt wird.

8. Verfahren nach einem der Ansprüche 1 bis 7, **dadurch gekennzeichnet, dass** das mindestens eine Öffnungswerkzeug (81) die Zellengehäuse (6, 56) entlang von mindestens einer Trennlinie (20, 70) zellenübergreifend auftrennt, und insbesondere mehrere Zellen (5, 55) des mindestens einen Zellenverbundes (4, 54) durch das mindestens eine Öffnungswerkzeug (81), ganz besonders durch ein einzelnes Öffnungswerkzeug (81), gleichzeitig geöffnet werden.

9. Verfahren nach einem der Ansprüche 1 bis 8, **dadurch gekennzeichnet, dass** die folgenden Stoffe zurückgewonnen und separat gesammelt werden:
- Verbund aus leeren Zellengehäusen (6, 56);
- ein oder mehrere Separatoren, insbesondere Separatorenbänder;
- Aktivmaterial (17) der Kathode;
- Kathodenträger, insbesondere Kathodenträgerband (18);
- Aktivmaterial (20) der Anode;
- Anodenträger, insbesondere Anodenträgerband (21);
- Elektrolyt.

10. **Anlage** zur Durchführung des Verfahren nach einem der Ansprüche 1 bis 9, **gekennzeichnet durch** eine Öffnungseinrichtung (80) mit einer Aufnahme (83) zur Aufnahme eines Zellenverbundes (4, 54) sowie insbesondere mit mindestens einem Öffnungswerkzeug (81) zum Öffnen der Zellen (5, 55) in einem Zellenverbund (4, 54).

11. Anlage nach Anspruch 10, **dadurch gekennzeichnet, dass** die Öffnungseinrichtung (80) eine Ausrichtvorrichtung (84) zum Ausrichten des Zellenverbundes (4, 54) in der Aufnahme (83) der Öffnungseinrichtung (80) enthält.

12. Anlage nach einem der Ansprüche 10 bis 11, **dadurch gekennzeichnet, dass** die Öffnungseinrichtung (80) eine Fixiervorrichtung (84) zum Fixieren des Zellenverbundes (4, 54) in der Aufnahme (83) der Öffnungseinrichtung (80) enthält.

13. Anlage nach einem der Ansprüche 10 bis 12, **dadurch gekennzeichnet, dass** das mindestens eine Öffnungswerkzeug (81) ein:
- spanendes Werkzeug, wie Fräswerkzeug oder Sägewerkzeug, oder ein
- Schneidwerkzeug
ist.

14. Anlage nach einem der Ansprüche 10 bis 13, **gekennzeichnet durch** eine Steuerungseinrichtung (90) zum Steuern des mindestens einen Öffnungswerkzeuges (81).

15. Anlage nach einem der Ansprüche 10 bis 14, **gekennzeichnet durch** eine Entnahmevorrichtung (91) zum Entnehmen der Elektrodenpakete (10, 60) aus den geöffneten Zellen (5, 55) des Zellenverbundes (4, 54).
